Europäisches Patentamt

European Patent Office

Office européen des brevets

(19)

(11) Veröffentlichungsnummer : **0 076 402**
**B1**

## (12) EUROPÄISCHE PATENTSCHRIFT

(45) Veröffentlichungstag der Patentschrift :
12.02.86

(21) Anmeldenummer : **82108552.9**

(22) Anmeldetag : **16.09.82**

(51) Int. Cl.⁴ : **H 04 Q   3/00**, H 04 M  19/08

(54) **Regeleinrichtung zur Steuerung von symmetrisch angeordneten, voneinander unabhängigen Konstantstromquellen.**

(30) Priorität : **29.09.81 DE 3138649**

(43) Veröffentlichungstag der Anmeldung :
**13.04.83 Patentblatt 83/15**

(45) Bekanntmachung des Hinweises auf die Patenterteilung : **12.02.86 Patentblatt 86/07**

(84) Benannte Vertragsstaaten :
**BE DE FR GB IT SE**

(56) Entgegenhaltungen :
**DE-A- 2 556 157**
**DE-A- 2 653 888**
**FR-A- 2 343 378**
**FR-A- 2 441 303**
**GB-A- 2 055 271**

(73) Patentinhaber : **Felten & Guilleaume Fernmeldeanlagen GmbH**
**Thurn- und Taxis-Strasse 10 Postfach 4943**
**D-8500 Nürnberg 10 (DE)**

(72) Erfinder : **Robra, Jörg, Dr.**
**Hallerstrasse 7**
**D-8501 Heroldsberg (DE)**
Erfinder : **Goschin, Hans, Ing.**
**Oberweiling Nr. 17**
**D-8436 Velburg (DE)**

(74) Vertreter : **Peuckert, Hermann**
**Philips Patentverwaltung GmbH Billstrasse 80 Postfach 10 51 49**
**D-2000 Hamburg 28 (DE)**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft eine Regeleinrichtung zur Steuerung von symmetrisch angeordneten, voneinander unabhängigen Konstantstromquellen, wobei die Regeleinrichtung eine Symmetrieregelung aufweist und der von den Konstantstromquellen gelieferte Schleifenstrom auf einen maximalen Wert begrenzt ist.

Aus der DE-AS 25 56 157 ist eine Schaltungsanordnung zur Speisung einer Teilnehmerendeinrichtung in Fernmeldeanlagen gemäß dem Oberbegriff des Patentanspruchs 1 bekannt. Die Speiseeinrichtung weist zwei Konstantstromquellen, die jeweils eine Darlington-Schaltung zweier Transistoren darstellen, auf. Eine der Sprechadern ist über eine Kollektor-Emitter-Strecke eines Transistors der einen Konstantstromquelle an einen positiven Pol einer zentralen Batterie gelegt. Die andere Sprechader ist über eine Kollektor-Emitter-Strecke eines Transistors der zweiten Konstantstromquelle an den negativen Pol der Batterie angelegt. Die Referenzspannungswerte für die Konstantstromquellen werden jeweils über einen Spannungsteiler eingestellt. Die Regeleinrichtung enthält zwei in Serie geschaltete Widerstände die als Shunt wirken. Bei unterschiedlichen Stromwerten des gemessenen Schleifenstroms in den beiden Sprechadern wird durch eine entsprechende Verstellung der Referenzspannungswerte der ursprüngliche Zustand, nämlich unabhängig vom Leitungswiderstand ein gleichgroßer, konstanter Schleifenstrom in den Sprechadern, wieder hergestellt. Um bei Erdtastenbetätigung einen zu hohen Schleifenstrom zu vermeiden ist am gemeinsamen Anschluß der in Serie geschalteten Shunt eine Zenerdiode vorgesehen. Der Schleifenstrom wird dadurch auf einen maximal zulässigen Wert begrenzt.

Die bekannte Speiseeinrichtung weist den Nachteil auf, daß im Falle eines niedrigen Schleifen- und Erdwiderstands deren Verlustleistung nicht reduziert wird. Weiterhin ist von Nachteil, daß Unsymmetriespannungen im Sprachbereich die Regelung beeinflußen. Durch die nichtlineare Regelkennlinie kann die Unsymmetriedämpfung nicht ausreichend sein.

Weiterhin ist aus DE-OS 26 53 888 ein Signaldetektor für eine Fernsprechvermittlungsstelle bekannt, wobei in der Fernsprechvermittlungsstelle Einrichtungen zur Speisung einer Teilnehmerendeinrichtung über die Sprechadern vorgesehen sind. Zur Gleichstromeinspeisung ist eine Kondensator- bzw. Übertragerbrücke vorgesehen, wobei die Spulen elektronisch nachgebildet werden. Eine Schaltungsanordnung zur Simulierung der Induktivität solcher Spulen enthält unter anderem einen Kondensator, sowie Widerstände und Operationsverstärker in einer bestimmten Beschaltung miteinander. Die Größe der Induktivität der Spule wird dabei bestimmt durch das Produkt $C51 \times R52 \times R53$, wobei die so erzeugten elektronischen Spulen zwischen der b-Ader und Minuspotential bzw. zwischen der a-Ader und Erdpotential liegen. Der auch im oben angegebenen Produkt auftretende Kondensator 51, welcher zwischen der a- und b-Ader angeordnet ist, dient zur Beeinflußung der Größe der Induktivität der elektronischen Spule und ist nicht Teil einer völlig anders aufgebauten Regeleinrichtung.

Aufgabe der Erfindung ist es, ein Verfahren zur Speisung einer Teilnehmerendeinrichtung der eingangs genannten Art anzugeben, das eine Reduzierung der Verlustleistung der Speiseeinrichtung gestattet und das eine Regelung nur für statisch unterschiedliche Stromwerte oder für niederfrequent überlagerte Gleichtaktspannungen auf den Sprechadern wirksam werden läßt.

Diese Aufgabe wird erfindungsgemäß dadurch gelöst, daß in der Regeleinrichtung ein elektronischer Schalter vorgesehen ist, mit dessen Steuereingang die Symmetrieregelung und ein frequenzabhängiges Glied verbunden sind, das bei Überschreitung einer vorgebbaren Grenze eines Stromdifferenzwertes zwischen den Sprechadern aufgrund unterschiedlicher von den Konstantstromquellen gelieferten Schleifengleichströmen, der elektronische Schalter die Symmetrieregelung der Regeleinrichtung sperrt und die Regeleinrichtung der Referenzspannungswerte für die Konstantstromquellen herabsetzt und daß das frequenzabhängige Glied bei kurzzeitigem Auftreten von Stromdifferenzwerten den elektronischen Schalter nicht wirksam werden lassen.

Der Vorteil eines solchen Verfahrens liegt nicht nur darin, daß eine thermische Überlastung der Konstantstromquellen an den Sprechadern im Falle von lange andauernden Erdtastendruck oder Erdkurzschluß verhindert wird, sondern daß darüber hinaus auch die Verlustleistung reduziert wird.

In einer Schaltungsanordnung zur Durchführung des Verfahrens nach Anspruch 1 und 2 ist die Regeleinrichtung mit einem gemeinsamen Anschluß zweier in Serie geschalteter Widerstände verbunden. Spannungsteiler für die Vorgabe von Referenzspannungswerten sind jeweils mit einem Anschluß eines Widerstandes der Regeleinrichtung verbunden. Parallel zu diesem Widerstand sind zwei in Reihe liegende Kollektor-Emitter-Strecken zweier Transistoren angeordnet. Weiterhin sind die Basen der beiden Transistoren über die Kollektor-Emitter-Strecke eines Transistors miteinander verbunden. Die Basis dieses Transistors ist sowohl an dem gemeinsamen Anschluß der in Serie geschalteten Widerstände als auch an einem Anschluß eines Kondensators angelegt. Der Kollektor und der Emitter dieses Transistors ist jeweils über einen Widerstand mit einem der Pole einer Betriebsspannungsquelle verbunden. Ein weiterer Anschluß des Kondensators ist an dem positiven Pol der Betriebsspannungsquelle angelegt.

Zur Reduzierung der Verlustleistung der Speiseeinrichtung kann in eine Widerstandskette der Spannungsteiler, welche zwischen den Polen der Betriebsspannungsquelle angeordnet ist, ein weiterer Widerstand gelegt werden. Dadurch wird die Referenzspannung für jede Konstantstromquelle gesenkt und der Schleifenstrom erniedrigt. Weiterhin werden die beiden Transistoren gesperrt, so daß gleichzeitig mit der Reduzierung des Schleifenstromwerts ein Sperren der Regelung zur Erzeugung gleicher Stromwerte in den Sprechadern verbunden ist.

Die nichtlineare Regelkennlinie würde eine ungenügende Unsymmetriedämpfung für Wechselspannungen im Sprachbereich zur Folge haben. Mit Hilfe des Kondensators wird auf einfache Weise die geforderte Dämpfung der Unsymmetriespannung im Sprachbereich erreicht.

In den Unteransprüchen sind weitere Ausgestaltungen der Erfindung angegeben.

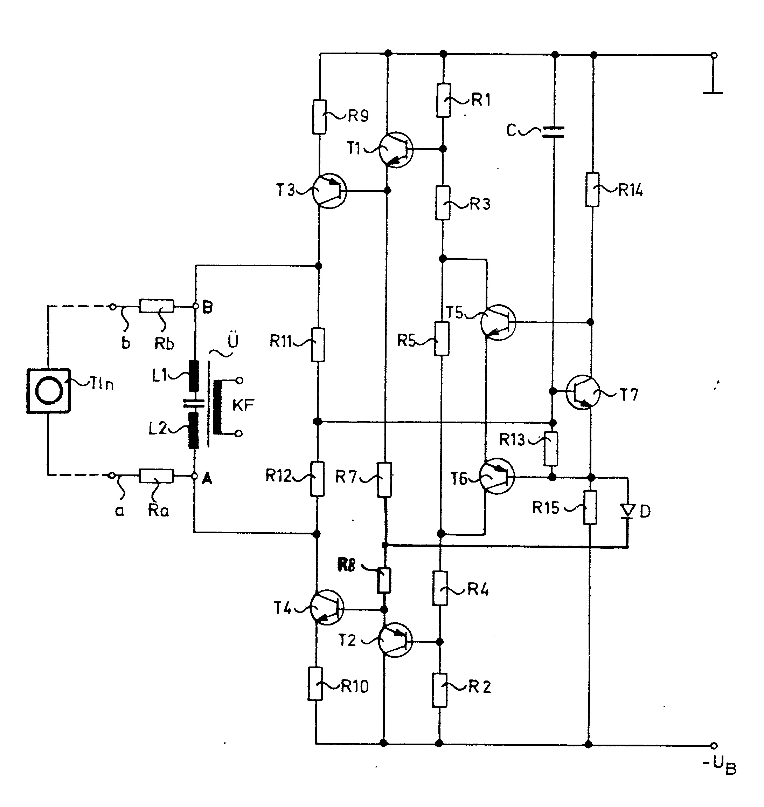

Die Erfindung wird nachfolgend anhand der Zeichnung näher beschrieben und erläutert. Zur elektronischen Gleichstromversorgung einer Teilnehmerendeinrichtung Tln werden in mit a und b bezeichneten Sprechadern Konstantstromquellen gelegt. Werden die beiden Konstantstromquellen in Reihe geschaltet so bewirken Unsymmetrien, z. B. Exemplarstreuungen der verwendeten Bauelemente, das Steuern einer der beiden Konstantstromquellen, insbesondere deren Transistoren in die Sättigung. Mit Hilfe einer Regeleinrichtung können die Transistoren der Konstantstromquellen im linearen Kennlinienbereich betrieben werden.

In der Zeichnung ist der Leitungswiderstand der Sprechader a bzw. b, der je nach Länge der Leitung unterschiedlich sein kann, durch einen Widerstand Ra bzw. Rb dargestellt. An eine Anschlußklemme A bzw. B der Sprechader a bzw. b sind die beiden Konstantstromquellen angeschlossen. Die Konstantstromquellen weisen jeweils zwei Transistoren T1, T3 bzw. T2, T4 und einen Widerstand R9 bzw. R10, die als Shunt wirken, auf. Die Basis jeweils des ersten Transistors T1 bzw. T2 ist mit einem gemeinsamen Anschluß eines Spannungsteilers R1, R3 bzw. R4, R2 verbunden. Die Spannungsteiler R1, R3 bzw. R4, R2 dienen zur Vorgabe der Referenzspannung für die Konstantstromquellen. Die Kollektoren der ersten Transistoren T1 bzw. T2 sind an jeweils einem Pol einer Betriebsspannungsquelle angelegt. Die Emitter sind über die Widerstände R7 und R8 miteinander verbunden. Weiterhin ist der Emitter des ersten Transistors T1 bzw. T2 jeweils an die Basis der zweiten Transistoren T3 bzw. T4 angelegt. Die Emitter der zweiten Transistoren T3 bzw. T4 sind jeweils über den Widerstand (Shunt) R9 bzw. R10 mit einem Pol der Betriebsspannungsquelle verbunden. An die Anschlußklemmen B und A sind jeweils die Kollektoren der zweiten Transistoren T3 bzw. T4 sowie jeweils ein Anschluß zweier, in Serie geschalteter Widerstände R11 und R12 angelegt. Im Verbindungsfall liegt zwischen den beiden Anschlußklemmen A und B und an einer damit verbundenen Sekundär-Seite eines Ankopplungsübertragers Ü die Sprechwechselspannung an. Die Sekundär-Seite des Ankopplungsübertragers Ü besteht aus zwei Wicklungen L1 und L2, die über einen Kondensator miteinander verbunden sind. Die Anschlüsse der Primärwicklung des Ankopplungsübertragers Ü werden einem Koppelfeld KF der Vermittlungsstelle zugeführt.

Über eine Widerstandskette der Widerstände R1, R3, R5, R4 und R2, welche zwischen den Polen der Betriebsspannungsquelle angeordnet ist, wird die Referenzspannung für die Konstantstromquellen eingestellt. Diese am Spannungsteiler R1, R3 bzw. R4, R2 eingestellte Referenzspannung für jeweils eine der Konstantstromquellen wird von deren ersten Transistoren T1 bzw. T2 verstärkt. Durch die in der Zeichnung dargestellte und erfindungsgemäße Zusammenschaltung der Transistoren T1, T3 bzw. T2, T4 kann erreicht werden, daß der Temperaturgang der Basis-Emitter-Dioden der Transistorpaare weitgehend kompensiert wird. Wird die Schleife geschlossen, d. h. wird in der Teilnehmerendeinrichtung Tln, z. B. einem Fernsprechgerät, der Handapparat abgehoben, so fließ ein Schleifenstrom der durch die Referenzspannung der Spannungsteiler R1, R3 bzw. R2, R4 bestimmt wird. Der Widerstand R5 ist dann über zwei, miteinander verbundene Kollektor-Emitter-Strecken zweier Transistoren T5 und T6 überbrückt.

Die Basen der beiden Transistoren T5 und T6 sind jeweils mit der Kollektor-Emitter-Strecke eines weiteren Transistors T7 verbunden. Die Basis dieses weiteren Transistors T7 ist an dem gemeinsamen Anschluß der in Serie geschalteten Widerstände R11, R12 angelegt. Ist der Transistor T7 gesperrt so sind die Transistoren T5 und T6 durchgeschaltet. Der dazu erforderliche Basisstrom für die beiden Transistoren T5 und T6 wird von der Betriebsspannungsquelle geliefert. Dazu ist die Basis des Transistors T5 über einen Widerstand R14 mit dem positiven Pol und die Basis des Transistors T6 über einen gleichgroßen Widerstand R15 mit dem negativen Pol der Betriebsspannungsquelle verbunden.

Liefert der Speisetransistor T3 der einen Konstantstromquelle einen geringeren Konstantstrom als der Speisetransistor T4 der zweiten Konstantstromquelle so werden mit dem Widerstand R11 bzw. R12 unterschiedliche Spannungswerte gemessen. Die Widerstandswerte der Widerstände R11 und R12 sind gleich groß, so daß an ihnen, bei konstantem und gleichgroßem Schleifenstrom in den Sprechadern a, b, jeweils die Hälfte der Sekundärspannung des Ankopplungsübertragers Ü abfällt. Durch die Verringerung des Spannungsabfalls an dem Widerstand R11 erfolgt eine Potentialverschiebung am gemeinsamen Anschluß der beiden Widerstände R11 und R12. Ein Widerstand R13 ist mit dem gemeinsamen Anschluß der Widerstände R11 und R12 und mit der Basis des Transistors T6 verbunden. Die Potentialverschiebung an diesem Anschluß bewirkt einen zusätzlichen Stromfluß über den Widerstand R13. Dadurch wird das Potential an der Basis von T6 negativer und, da die Transistoren T6 und T5 beide durchgeschaltet sind, auch das Potential an den Kollektoren von T5 und T6. Über die Spannungsteiler R4, R2 bzw. R1, R3 wird das Potential an den Basen der Transistoren T2 bzw. T3 negativer. Die Referenzspannung für die Konstantstromquelle bestehend aus T2, T4 sinkt, während die Referenzspannung für die Konstantstromquelle bestehend aus T1 und T3 im gleichen Maße ansteigt. Dadurch wird die Kostantstromquelle mit den Transistoren T1, T3 stärker ausgesteuert bis über dem Widerstand R11 bzw. R12 wieder jeweils die Hälfte der Sekundärspannung des Ankopplungsübertragers Ü abfällt.

Das z. B. durch Bauteiltoleranzen hervorgerufene Ungleichgewicht der beiden Konstantstromquellen wird durch eine entsprechende Gegenregelung mittels Verstimmung der Spannungsteiler R1, R3 und R2, R4 wieder ausgeglichen. Diese Gegenregelung ist nur für statisches Ungleichgewicht oder für niederfrequente, überlagerte Gleichtaktspannung wirksam. Damit Unsymmetriespannungen im Sprachbereich die Regelung nicht beeinflußen ist zwischen der Basis des Transistors T7 und dem positiven Pol der Betriebsspannungsquelle ein Kondensator C vorgesehen. Der Kondensator C bewirkt die geforderte Dämpfung der Unsymmetriespannung im Sprachbereich, welche sonst infolge der nichtlinearen Regelkennlinie nicht erreichbar wäre.

Erdtastendruck oder Erdschluß bewirken eine Symmetrieverschiebund des Spannungsabfalls an dem Widerstand R11 bzw. R12, welche durch die beschriebene Gegenregelung nicht ausgeglichen werden kann.

Mit einem Anschluß des Widerstandes R13 bzw. R15 ist die Anode einer Diode D verbunden. Die Katode der Diode D ist an den Abgriff des Spannungsteilers aus R7 und R8 angeschlossen, dessen Potential etwas positiver als die Mitte der Betriebsspannung ist. Bei Erdtastenbetätigung wird beispielsweise die Speiseader a auf Masse gelegt, so daß die in der Speiseader b liegende Konstantstromquelle stromlos ist. Dadurch steigt die Spannung an Katode der Diode D soweit an, daß diese durchgeschaltet wird. Es entsteht ein erhöhter Spannungsabfall am Widerstand R13 der zur Durchschaltung des Transistors T7 führt. Dadurch werden die in Serie liegenden Transistoren T5 und T6 gesperrt, so daß die Widerstandskette um den Widerstand R5 erweitert wird. Damit wird die Referenzspannung für die beiden Konstantstromquellen gesenkt und der Schleifenstrom auf einen entsprechenden Wert erniedrigt. Durch das Sperren des Transistors T6 ist gleichzeitig die Symmetrieregelung unterbrochen, so daß eine thermische Überlastung des Transistors T4 dadurch ausgeschlossen ist.

**Patentansprüche**

1. Regeleinrichtung zur Steuerung von symmetrisch angeordneten, voneinander unabhängigen Konstantstromquellen, wobei die Regeleinrichtung eine Symmetrieregelung aufweist und der von den Konstantstromquellen gelieferte Schleifenstrom auf einen maximalen Wert begrenzt ist, dadurch gekennzeichnet, daß in der Regeleinrichtung (R1 bis T5, R11 bis R15, T5 bis T7, D, C) ein elektronischer Schalter (T7) vorgesehen ist, mit dessen Steuereingang die Symmetrieregelung (R1 bis R4, R11 bis R13, T5, T6) und ein frequenzabhängiges Glied (C) verbunden sind, daß bei Überschreitung einer vorgebbaren Grenze eines Stromdifferenzwertes zwischen den Sprechadern (a, b) aufgrund unterschiedlicher von den Konstantstromquellen (T1, T3, R9 bzw. T2, T4, R8) gelieferten Schleifengleichströmen, der elektronische Schalter (T7) die Symmetrieregelung (R1 bis R4, R11 bis R13, T5, T6) der Regeleinrichtung (R1 bis R5, R10 bis R15, T5 bis T7, D, C) sperrt und die Regeleinrichtung (R1 bis R5, R10 bis R15, T5 bis T7, D, C) die Referenzspannungswerte für die Konstantstromquellen (T1, T3, R9 bzw. T2, T4, R8) herabsetzt und daß das frequenzabhängige Glied (C) bei kurzzeitigem Auftreten von Stromdifferenzwerten den elektronischen Schalter (T7) nicht wirksam werden läßt.

2. Schaltungsanordnung zur Durchführung des Verfahrens nach Anspruch 1 und 2, dadurch gekennzeichnet, daß die Regeleinrichtung mit einem gemeinsamen Anschluß zweier in Serie geschalteter Widerstände (R11, R12) verbunden ist, daß Spannungsteiler (R1, R3 und R4, R2) zur Vorgabe der Referenzspannung jeweils mit einem Anschluß eines Widerstandes (R5) der Regeleinrichtung verbunden sind und daß parallel zu diesem Widerstand (R5) zwei in Reihe liegende Kollektor-Emitter-Strecken zweier Transistoren (T5, T6) angeordnet sind.

3. Schaltungsanordnung nach Anspruch 3, dadurch gekennzeichnet, daß parallel zu den Basen der beiden Transistoren (T5, T6) die Kollektor-Emitter-Strecke eines Transistors (T7) angeordnet ist, dessen Basis sowohl mit dem gemeinsamen Anschluß der in Serie geschalteter Widerstände (R11, R12) als auch mit einem Anschluß eines Kondensators (C) verbunden ist, dessen Kollektor und Emitter über jeweils einen gleichen Widerstand (R14, R15) an einem der Pole einer Betriebsspannungsquelle angeschaltet sind und daß der zweite Anschluß des Kondensators (C) mit dem positiven Pol der Betriebsspannungsquelle verbunden ist.

4. Schaltungsanordnung nach Anspruch 4, dadurch gekennzeichnet, daß zwischen dem gemeinsamen Anschluß der beiden Widerstände (R11, R12) und einer der Basen der zwei Transistoren (T5, T6) ein Widerstand (R13) angeordnet ist und daß ein Anschluß des Widerstands (R13) über eine Diode (D) mit einem Anschluß eines Spannungsteilers (R7, R8) verbunden ist.

5. Schaltungsanordnung nach einem der Ansprüche 1-5, dadurch gekennzeichnet, daß die Konstantstromquellen jeweils zwei Transistoren (T1, T3 oder T2, T4) und einen Widerstand (R9 oder R10) aufweisen, daß die Basis jeweils eines ersten Transistors (T1 oder T2) des Transistorpaares mit dem gemeinsamen Anschluß des zugehörigen Spannungsteilers (R1, R3 oder R2, R4) verbunden ist, daß der Kollektor dieser Transistoren (T1 oder T2) an jeweils einem Pol der Betriebsspannungsquelle angelegt ist, das deren Emitter über zwei Widerstände (R7, R8) miteinander und jeweils mit der Basis der zweiten Transistoren (T4 oder T3) des Transistorpaars verbunden sind und daß jeweils die Emitter der zweiten Transistoren (T4 oder T3) jeder Konstantstromquelle über deren Widerstand (R9 oder R10) mit einem Pol der Betriebsspannungsquelle und die Kollektoren über die beiden Widerstände (R11, R12) miteinander verbunden sind.

## Claims

1. A control arrangement for controlling symmetrically arranged constant current sources which are independent from each other, the control arrangement having a symmetry control and the loop current produced by the constant current sources being limited to a maximum value, characterized in that the control arrangement (R1 to R5, R11 to R15, T5 to T7, D, C) comprises an electonic switch (T7) to whose control input the symmetry control (R1 to R4, R11 to R13, T5, T6) and a frequency-dependent member (C) are connected, that when a predetermined limit of a current difference value between the speech wires (A, B) is exceeded, the electronic switch (T7) inhibits because of different loop direct currents produced by the constant current sources (T1, T3, R9 or T2, T4, R8, respectively) the symmetry control (R1 to R4, R11 to R13, T5, T6) of the control arrangement (R1 to R5, R10 to R15, T5 to T7, D, C), and the control arrangement (R1 to R5, R10 to R15, T5 to T7, D, C) reduces the reference voltage values for the constant current sources (T1, T3, R9 or T2, T4, R8, respectively) and that for brief occurrences of current difference values the frequency-dependent network (C) prevents the electronic switch (T7) from becoming operative.

2. A circuit arrangement for performing the method as claimed in Claim 1, characterized in that the control arrangement is connected to the junction between two series-arranged resistors (R11, R12), that voltage dividers (R1, R3 and R4, R2) for presetting the reference voltage are each connected to a terminal of a resistor (R5) of the control arrangement and that in parallel with this resistor (R5) two series-arranged collector-emitter parths of two transistors (T5, T6) are arranged.

3. A circuit arrangement as claimed in Claim 2, characterized in that in parallel with the bases of the two transistors (T5, T6) there is arranged the collector-emitter path of a transistor (T7), whose base is connected to both the common terminal of the series-arranged resistors (R11, R12) and to a terminal of a capacitor (C), whose collector and emitter are each connected via a resistor (R14, R15) of equal values to one of the poles of an operating voltage source and that the second terminal of the capacitor (C) is connected to the positive pole of the operating voltage.

4. A circuit arrangement as claimed in Claim 3, characterized in that a resistor (R13) is arranged between the junction of the two resistors (R11, R12) and one of the bases of the two transistors (T5, T6) and that a terminal of the resistor (R13) is connected via a diode (D) to a terminal of a voltage divider (R7, R8).

5. A circuit arrangement as claimed in any one of the Claims 1 to 4, characterized in that the constant current sources each include two transistors (T1, T3 or T2, T4) and a resistor (R9 or R10), that the base of always a first transistor (T1 or T2) of the pair of transistors is connected to the junction of the associated voltage divider (R1, R3 or R2, R4), that the collector of these transistors (T1 or T2) is always connected to a pole of the operating voltage source, that their emitters are interconnected via two resistors (R7, R8) and are always connected to the base of the second transistors (T4 or T3) of the pair of transistors and that always the emitters of the second transistors (T4 or T3) of each constant current source are connected via their resistors (R9 or R10) to a pole of the operating voltage source and the collectors are interconnected via the two resistors (R11, R12).

## Revendications

1. Dispositif de régulation pour la commande de sources de courant constantes, indépendantes l'une de l'autre et disposées symétriquement, étant entendu que le dispositif de régulation présente une régulation de symétrie et que le courant de boucle fourni par les sources de courant constantes est limité à une valeur maximale, caractérisé en ce que dans le dispositif de régulation (R1 à R5, R11 à R15, T5 à T7, D, C) est prévu un interrupteur électronique (T7), à l'entrée de commande duquel est connectée la régulation de symétrie (R1 à R4, R11 à R13, T5, T6) et un élément (C) dépendant de la fréquence, que, dans le cas d'un dépassement par excès d'une limite préétablie d'une valeur de différence de courant entre les fils de conversation (a, b) en raison de différences entre les courants continus de boucle fournis par les sources de courant constantes (T1, T3, R9 ou T2, T4, R8), l'interrupteur électronique (T7) bloque la régulation de symétrie (R1 à R4, R11 à R13, T5, T6) du dispositif de régulation (R1 à R5, R10 à R15, T5 à T7, D, C) et le dispositif de régulation (R1 à R5, R10 à R15, T5 à T7, D, C) réduit les valeurs de tension de référence pour les sources de courant constantes (T1, T3, R9 ou T2, T4, R8) et que l'élément dépendant de la fréquence (C) ne permet pas à l'interrupteur électronique d'intervenir dans le cas de différences de valeurs de courants de courte durée.

2. Montage de circuit selon la revendication 1, caractérisé en ce que le dispositif de régulation est connecté à une borne commune de deux résistances connectées en série (R11, R12), que des diviseurs de tension (R1, R3 et R4, R2) sont connectés pour préétablir la tension de référence, chacun à une borne d'une résistance (R5) du dispositif de régulation et que deux trajets collecteur-émetteur en série de deux transistors (T5, T6) sont disposés en parallèle avec cette résistance (R5).

3. Montage de circuit suivant la revendication 2, caractérisé en ce que le trajet collecteur-émetteur d'un transistor (T7) est disposé en parallèle aux bases des deux transistors (T5, T6), la base du transistor (T7) étant connectée à la fois à la borne commune des résistances en série (R11, R12) et à une borne d'un condensateur (C), le collecteur et l'émetteur du transistor (T7) étant connectés par l'intermédiaire chaque fois d'une résistance de même valeur (R14, R15) à un pôle d'une source de tension de service et que la deuxième borne du condensateur (C) est connectée au pôle positif de la source de tension de service.

4. Montage de circuit suivant la revendication 3, caractérisé en ce qu'entre la borne commune des deux résistances (R11, R12) et une des bases des deux transistors (T5, T6) est disposée une résistance (R13) et qu'une borne de la résistance (R13) est connectée par l'intermédiaire d'une diode (D) à une borne d'un diviseur de tension (R7, R8).

5. Montage de circuit suivant l'une quelconque des revendications 1 à 4, caractérisé en ce que les sources de courant constantes comprennent chacune une paire de transistors (T1, T3 ou T2, T4) et une résistance (R9 ou R10), que la base d'un premier transistor (T1 ou T2) de chaque paire de transistors est connectée à la borne commune du diviseur de tension associé (R1, R3 ou R2, R4), que les collecteurs de ces transistors (T1 ou T2) sont connectés chacun à un pôle d'une source de tension de service, que leurs émetteurs sont interconnectés par l'intermédiaire de deux résistances (R7, R8) et sont connectés chacun à la base des seconds transistors (T4 ou T3) de la paire de transistors et que les émetteurs des seconds transistors (T4 ou T3) de chaque source de courant constant sont connectés par l'intermédiaire de leurs résistances (R9 ou R10) à un pôle de la source de tension de service, les collecteurs étant interconnectés par l'intermédiaire des deux résistances (R11, R12).